Europäisches Patentamt

European Patent Office

Office européen des brevets

(19)

(11) Publication number: 0 079 013
A2

# (12) EUROPEAN PATENT APPLICATION

(21) Application number: 82110032.8

(51) Int. Cl.³: B 01 D 21/00

(22) Date of filing: 29.10.82

(30) Priority: 05.11.81 PL 233681

(43) Date of publication of application:
18.05.83 Bulletin 83-20

(84) Designated Contracting States:
DE FR GB

(71) Applicant: Instytut Mechaniki Precyzyjnej
ul. Duchnika 3
Warszawa(PL)

(72) Inventor: Tuznik, Franciszek
Al. Waszyngtona 33 m 144
Warszawa(PL)

(72) Inventor: Lis, Andrzej
ul. Boguslawskiego 6
Warszawa(PL)

(72) Inventor: Olszewski, Witold
ul. Korsykanska 5
Warszawa(PL)

(72) Inventor: Pietraszek, Pawel
ul. Znicza 16
Warszawa(PL)

(74) Representative: Finck, Dieter et al,
Patentanwälte v. Füner, Ebbinghaus, Finck
Mariahilfplatz 2 & 3
D-8000 München 90(DE)

(54) A device for clarification of liquids and separation of precipitates.

(57) A device for clarification of liquids and separation of precipitates comprises a contact chamber (1) above which there is a multi-stream settling tank (2) and below which there is a chamber (6) for thickening the precipitate. The device further comprises an overflow pocket (5) for clarified liquid. The contact chamber (1) has a shape widening upwards, preferably the shape of an inversed cone or an inversed truncated pyramid. The axis of the contact chamber (1) is skew to the level, whereas on the upper edge of the contact chamber (1) an adjustable overflow edge (4) is situated. In the upper part of the multi-stream settling tank (2) there is an outflow unit (7). The overflow pocket (5) is below the outflow unit (7). The outflow unit (7) in constructed of many uniformly distributed outlet elements (8) which are stub pipes directed upwards and situated on the upper horizontal or inclined surface of the cover plate of the unit (7). The outlet surface of all stub pipes is situated on the same common plane above the plate (9).

Croydon Printing Company Ltd

A Device for Clarification of Liquids and
Separation of Precipitates

The invention relates to a device for clarification of
liquids and separation of precipitates, comprising a
contact chamber, a multi-stream settling tank, a chamber
for thickening the precipitate and a container for
clarified liquid.

In the device coagulation, flocculation, sedimentation,
thickening and separation of precipitates and clarification of liquids proceed. The device serves for
conducting chemical reactions, especially for water
purification and industrial waste treatment. The device
operates in continuous manner.

A known device for clarification and separation of
precipitates is a multi-stream settling tank. The
known settling tank is provided with packets of conduits
in which sedimentation of suspensions contained in the
liquid process. The settling tank of this type is known
as thin-layer, skew or lamellar.

From U.S. Patents 4,096,063, 4,122,017, 4,110,211 and
4,172,789 and from British Patents 1 452 585 and 1 463 380
devices for clarification of liquids and separation of
precipitates are known comprising a contact chamber, a
multi-stream settling tank, a chamber for thickening the precipitate and a container for clarified liquid. In these devices the suspension is separated from the liquid usually in many successive devices of big volume, which causes that both the path and the time technologically necessary for good separation of precipitates are much longer and, besides, the quality of clarified liquid is to low. The efficiency of the known assemblies of devices is not sufficiently high.

From the U.S. Patent 4,136,012 there is known a blocked device for purification of water or industrial waste water which is most similar to the device according to the invention. The interior of the device is divided into three chambers connected in series among themselves. The three chambers are separated from one another by skew walls parallel in relation to the skew outer wall. The first chamber serves for neutralization and coagulation, the second for flocculation, and the third is a multi-stream skew lamellar decanter in which the finest particles of the suspension are decanted. The coagulant is introduced into the neutralization chamber, and the flocculant is proportioned along the whole width of the inner skew wall separating the coagulation chamber from the flocculation chamber. In the flocculation chamber there are many skew plates parallel to all other skew walls of the device. In oblique pipes of the decenter laminarization of the flow and settling of the finest particles of the precipitate occur. The sludge is taken off by a stub pipe lying in the lowest part of the device and the clarified liquid - by a collector situated above the decanter.

This known device separates from the liquid fractions of definite suspensions and precipitates of the size not smaller than from several dozens to a dozen or so micrometers. In order to make this known device separate fractions of definite suspensions and precipitates of the size smaller than a dozen or so micrometers, it would be necessary to increase considerably its volume to lengthen the path of purification of the liquid, to reduce the flow velocity of the purified liquid and to increase the time for which the liquid remains in the device.

The object of the invention is to design a device for clarification of liquids and separation of precipitates, which at relatively small dimensions will enable increasing the separation yield of suspensions and improving the quality of clarified liquid. The object of the invention is to design a device for separation from liquids of fractions of precipitates and suspensions of the size of to several micrometers, for a comparable type of precipitates and suspensions. The object of the invention is also to design a device of dimensions smaller than those of the known devices but of little better efficiency and output, as well as to reduce labour- and time-consumption of sevice in comparison with the known devices.

These objects are obtained with a device of the kind mentioned above which is characterized in that a multi-stream settling tank is situated above the contact chamber, in that below the contact chamber there is a chamber for thickening the precipitate, in that the container for clarified liquid is an overflow pocket, in that the contact chamber is widening upwards, preferably in a shape of an inverted cone or an inverted pyramid, in that the axis of the contact chamber is oblique in relation to the level, in that on the upper edge of the contact chamber there is an adjustable overflow edge, in that the upper part of the multi-stream settling tank there is an outflow unit, in that the overflow pocket is situated below the outflow unit which is constructed from many uniformly distributed outflow elements which are stub pipes directed upwards and situated on the upper horizontal or inclined surface of a cover plate of the outflow unit, whereby the outlet surface of all stub pipes is situated on the same common . plane above the plate, and in that legs of the device comprise levelling screws.

It is preferable if the contact chamber is filled with tower packings.

What is especially significant in the solution of the device according to the invention is the configuration of the contact chamber, the way of situating the contact chamber in relation to the multi-stream settling tank, the possibility of adjusting the size of the contact chamber by means of a slidable overflow edge and the way of solving the outflow unit of clarified liquid.

The device according to the invention has such a significant advantage as removing from purified liquid suspensions and precipitates of the size of up to about 1 micrometer. In comparison with the known device of the same quanitities, the device according to the invention removes additionally suspensions and precipitates of the sizes of from about 25-30 micrometers to about 1 micrometer. The amount of suspensions precipitated in purified liquid in the device according to the invention is increased from several to a dozen or so percent in relation to the known device of the same size.

It is indicated that proportioning the reactants assisting the process of separation of suspensions and clarification of liquid, for example, a flocculant, is performed directly into the conduit supplying contaminated liquid to the device. The reactant thus introduced is mixed in the conduit with clarified liquid in the path of the inflow to the contact chamber. The shape of the contact chamber widening upwards enables slow decrease of the flow velocity till the velocity close to the flow velocity of liquid along the sediments conduit in the multi-stream settling tank. During the flow of liquid with the precipitate through the contact chamber in the first phase in the inlet zone coagulation and/or flocculation and/or clarification of suspensions of precipitates through the contact with previously formed suspension filling the contact chamber occur. In certain conditions in the outlet zone of the contact chamber the suspension forms a small layer of suspended precipitate through which the liquid being clarified flows at a small velocity, for which the further process of the separation of the remainder of precipitates proceeds in the settling tank performing the function of a device finally purifying the liquid and stabilizing the work of the contact chamber. The precipitate from the contact chamber and the multi-stream settling tank through the adjustable overflow edge situated on the upper edge of the contact chamber gets into the chamber for thickening the precipitate, wherefrom after preliminary thickening it proceeds for further processing. Clarified liquid flows out from the multi-stream settling tank through the outflow unit to the overflow pocket of purified liquid. The outflow unit comprises uniformly arranged outlet elements which are stub pipes directed upwards. Stub pipes are situated on the upper surface of the outflow unit of the multi-stream settling tank in the cover plate. The outlet surface of all stub pipes is situated in the same common plane protruding above the plate. Such a design enables forcing a uniform flow of liquid through the settling tank and also making independent the outlet from particular stub pipes, and uniform outflow of clarified liquid from the whole surface of the settling tank. Levelling of outlets of stub pipes is performed by means of levelling screws, whereas the cover plate can be horizontal or inclined, which enables different location of outflow stub pipes in particular outflow planes, depending on the type and the flow of liquid.

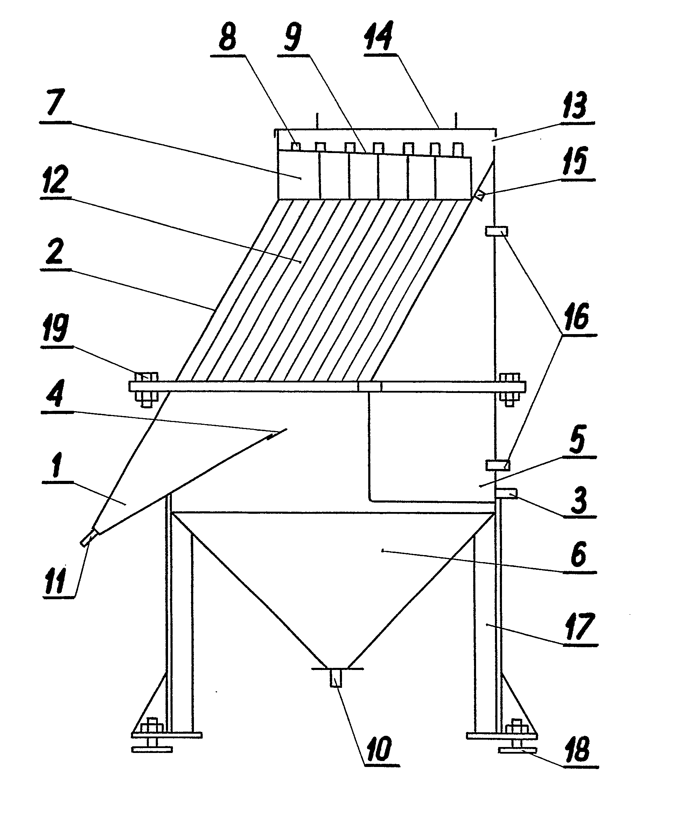

In the drawing the device according to the invention is presented by way of an embodiment.

A contact chamber 1 is situated under a multi-stream settling tank 2 and has an adjustable or slidable overflow edge 4. The device has also an overflow pocket 5 situated above the thickening chamber 6 and under the outflow unit 7, with outlet stub pipes 8 and a cover plate 9. The thickening chamber 6 has in its lower part a draining valve 10. The contact chamber 1 has an outlet stub pipe 11. The settling tank 2 is provided with a laminar unit which is a lamellar-skew pack 12. The outflow unit 7 has also a venting hole 13, a cover 14 and an outflow hole 15. The overflow pocket has level signalling device 16 and an outlet stub pipe 3. The device is set up at four legs 17 provided with levelling screws 18. The upper part of the device with the settling tank 2 and the outflow unit 7 is connected with the other lower part of the device by means of clamping screws 19.

The device is made of steel and protected by a chemo-resistant paint coating. The lamellar pack 12 and the cover plate 9 are made of polyvinylchloride. Dimensions of the device are: length - 1800 mm, width - 1000 mm, height - 2200 mm. Through the device a suspension of zinc hydroxide $Zn(OH)_2$ of a concentration of 500 $g/m^3$ and hydration of 98,5 % is passed. At a flow rate through the device of equal 1,0 $m^3$/hour and the use of an anion flocculant prepared on the basis of polyacryloamides ("Rokrysol WF-2") a removal of 97 % of suspension was obtained. The temperature of purified liquid was 23°C.

Claims

1. A device for clarification of liquids and separation of precipitates, comprising a contact chamber, a multi-stream settling tank, a chamber for thickening the precipitate and a container for clarified liquid, characterized in that the multi-stream settling tank (2) is situated above the contact chamber (1), in that below the contact chamber (1) there is the chamber (6) for thickening the precipitate, in that the container for clarified liquid is an overflow pocket (5), in that the contact chamber (1) has a shape widening upwards, preferably the form of an inversed cone or an inversed pyramid, in that the axis of the contact chamber (1) is inclined to the level, in that on the upper edge of the contact chamber (1) there is an adjustable overflow edge (4), in that in the upper part of the multi-stream settling tank (2) there is an outflow unit (7), in that the overflow pocket (5) is situated below the outflow unit (7), in that the outflow unit (7) is built of many uniformly arranged outlet elements (8) which are stub pipes directed upwards and situated on the upper horizontal or inclined surface of a cover plate (9) of the unit (7), whereby the outlet surface of all stub pipes is on the same common plane above the plate (9), and in that in legs (17) of the device screws (18) are comprised.

2. A device according to claim 1, characterized in that the contact chamber (1) is filled with tower packings.